# EUROPÄISCHE PATENTSCHRIFT

(11) **EP 1 420 183 B1**
(45) Veröffentlichungstag und Bekanntmachung des Hinweises auf die Patenterteilung: **02.11.2005**
(21) Anmeldenummer: 03020218.8
(22) Anmeldetag: 06.09.2003
(51) Int. Cl.: F16D 13/64, F16D 13/52, F16D 69/02

(54) **Kupplung, vorzugsweise Mehrscheibenkupplung**
Clutch, preferably multiple disc clutch
Embrayage, de préférence embrayage à disques multiples

(30) Priorität: 15.11.2002 DE 10253233
(43) Veröffentlichungstag der Anmeldung: 19.05.2004
(73) Patentinhaber: Dr.Ing. h.c.F. Porsche Aktiengesellschaft, 70435 Stuttgart (DE)
(72) Erfinder: Herberg, Klaus, 74336 Brackenheim (DE)

(56) Entgegenhaltungen:
- EP-A- 1 293 694
- EP-A- 1 323 944
- DE-A- 10 156 947
- DE-C- 19 701 292
- US-A- 4 828 089
- US-A- 6 042 935

## Beschreibung

Die Erfindung betrifft eine Kupplung, vorzugsweise Mehrscheibenkupplung zwischen einer Brennkraftmaschine und einem Getriebe, die in ein Kraftfahrzeug eingebaut sind, wobei die Kupplung Antriebsscheiben und Übertragungsscheiben umfasst.

Eine gattungsgemäße Kupplung ist aus US-A-4,828,089 bekannt.

Es ist eine Kupplung der eingangs Gattung bekannt, US 4,846,326 und US Re. 36, 363, die mit Antriebsscheiben und Übertragungsscheiben aus Kohlenstoff versehen sind. Untersuchungen haben gezeigt, dass wenn sowohl die Antriebsscheiben wie auch die Übertragungsscheiben der Kupplung aus Kohlenstoff bestehen beim Einsatz in serienmäßigen Kraftfahrzeugen vor allem Komfortnachteile in Kauf genommen werden müssen, die als störendes Rupfen bei Anfahrvorgängen in Erscheinung treten.

Aus der US 5,452,728 gehen Kupplungsscheiben hervor, zwischen denen Separierscheiben aus Stahl vorgesehen sind. Die Separierscheiben sind mit einer Schicht aus Keramik versehen.

In der US 5,452 784 wird eine Mehrscheibenkupplung behandelt, deren Antriebsscheiben und Übertragungsscheiben auf den einander zugekehrten Flächen einen dünnen Film aus Keramik aufweisen.

Es ist Aufgabe der Erfindung Antriebsscheiben und Übertragungsscheiben einer zwischen einer Brennkraftmaschine und Getriebe eines Kraftfahrzeugs angeordneten Kupplung durch gezielte Gestaltung so auszubilden, dass die Kupplung bei hoher Drehmomentübertragung und Verschleißfestigkeit sich durch optimierte Funktionsfähigkeit namentlich bezüglich Funktion auszeichnet.

Nach der Erfindung wird dieses Aufgabe durch die Merkmale des Patentanspruchs 1 gelöst. Weitere die Erfindung ausgestaltende Merkmale sind in den nachfolgenden abhängigen Patentansprüchen enthalten.

Die mit der Erfindung hauptsächlich erzielten Vorteile sind darin zu sehen, dass durch eine gezielte Ausbildung der Antriebsscheiben und der Übertragungsscheiben bzw. deren Reibabschnitte der Kupplung letztere nicht nur drehmomentübertragungsfest und verschleißwiderstandsfähig, sondern auch weitgehend rupfunempfindlich ist und damit einen Beitrag zur Komfortverbesserung leistet. Dabei entsteht durch eine definierte Werkstoffwahl der Antriebsscheiben und der Übertragungsscheiben oder ihrer Reibabschnitte bei ihrem Zusammenwirken ein abfallender Reibwert. Die Werkstoffe der Antriebsscheiben und der Übertragungsscheiben gegebenenfalls nur ihre Reibflächen weisen einerseits hohe Verschleißfestigkeit sowie Drehzahlfestigkeit und andererseits hohen Reibwert und hohe thermische Stabilität auf. Darüber hinaus wird die Kupplung dadurch optimiert, wenn die Antriebsscheiben aus Keramik mit Fasergewebe und die Übertragungsscheiben aus gesintertem organisch gebundenem Werkstoff bestehen. Gerade letzterer Werkstoff besitzt kompressible Eigenschaften, die ein komfortables Zusammenwirken der Antriebsscheiben und der Übertragungsscheiben unterstützen.

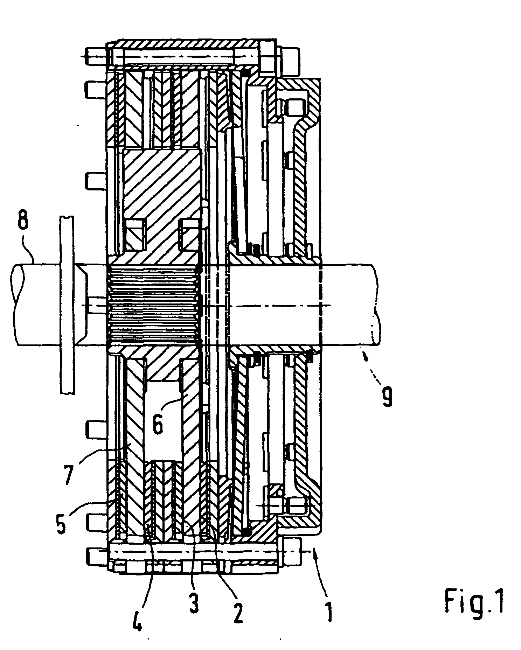

In der Zeichnung wird eine Ausführungsform einer Merkmale der Erfindung aufweisenden Kupplung gezeigt, die nachstehend näher beschrieben ist.
Es zeigen
- Fig. 1: einen Längsschnitt durch eine Kupplung, die zwischen einer Brennkraftmaschine und einem Schaltgetriebe angeordnet ist,

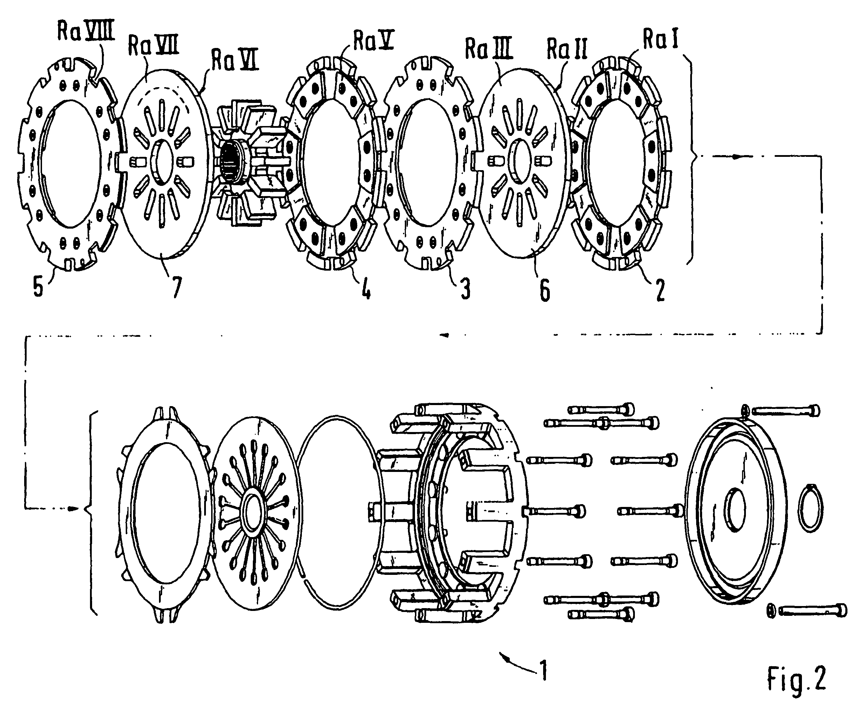

- Fig. 2: Einzelheiten der Fig.1 in einer Explosionsdarstellung,

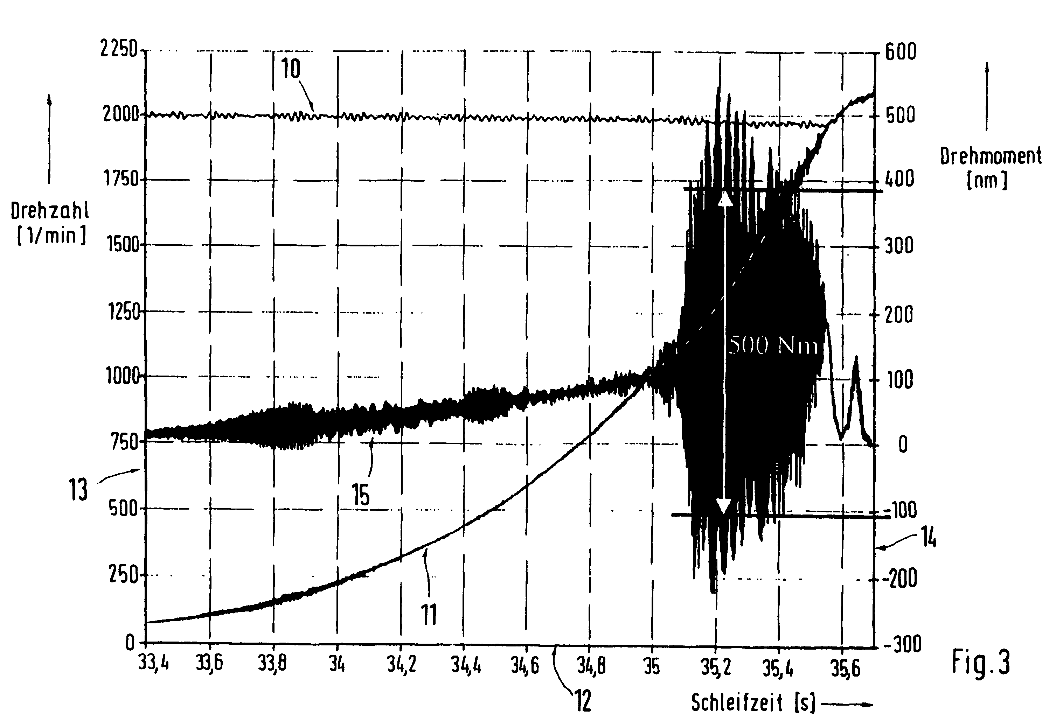

- Fig. 3: ein Diagramm über den Verlauf eines Drehmoments zwischen Antriebsdrehzahl und Abtriebszahl einer herkömmlichen Kupplung,
- Fig. 4: ein Diagramm entsprechend Fig. 2, jedoch einer Kupplung mit den Merkmalen nach der Erfindung,
- Fig. 5: ein Diagramm über den Verlauf eines Reibwerts nach der Kupplung mit den Merkmalen der Erfindung.

Eine Kupplung 1 der Reibungsgattung ist zwischen einer Brennkraftmaschine und einem Schaltgetriebe eines bspw. zur Hochleistungskategorie zählenden Kraftfahrzeugs - Sportwagengattung - angeordnet, wovon lediglich die Kupplung 1 dargestellt ist. Sie ist als Mehrscheibenkupplung ausgeführt und umfasst Antriebsscheiben 2, 3, 4 und 5 sowie Übertragungsscheiben 6 und 7. Die Antriebsscheiben 2, 3, 4 und 5 sind mit einer Kurbelwelle 8 der Brennkraftmaschine verbunden; die Übertragungsscheiben 6 und 7 mit einer Getriebeeingangswelle 9.

Zwischen den Antriebsscheiben 2, 3, 4 und 5 sowie den Übertragungsscheiben 6 und 7 sind Reibabschnitte Ral, Rall, Ralll, RaIV, RaV, Ra VI, RaVII und RaVIII vorgesehen. Die Antriebsscheiben 2, 3, 4 und 5 sowie die Übertragungsscheiben 6 und 7 selbst bzw. ihre Reibabschnitte Ral, Rall, Ralll, RaIV, RaV, RaVI, RaVIII und RaVIII sind so ausgebildet, dass letztere weitgehend rupfunempfindlich sind. Hierzu werden Werkstoffe verwendet, durch die ein abfallender Reibwert Rw entsteht. Dies wird unterstützt, wenn die Antriebsscheiben 2, 3,4 und 5 sowie die Übertragungsscheiben 6 und 7 bzw. ihre zugehörigen Reibabschnitte Ral, RaII, RaIII, RaIV, RaV, RaVI, RaVII, RaVIII einerseits eine hohe Verschleißfestigkeit sowie Drehzahlfestigkeit und andererseits einen hohen Reibwert und eine hohe thermische Stabilität aufweisen.

Im Ausführungsbeispiel bestehen die Übertragungsscheiben 6 und 7 bzw. die entsprechenden Reibabschnitte aus Keramik d.h. kohlenfaserverstärkter, poröser Kohlenstoff, dessen Poren zumindest teilweise mit Silizium und Siliziumkarbid gefüllt sind. Dieser Kohlenstoff wird mit einem Flüssig-Silizier-Verfahren mit flüssigem Silizium infiltriert und einer Wärmebehandlung unterworfen. Dabei wandelt sich das Silizium mit Kohlenstoff zu SiC um (siehe DE 44 38 456 A1). In die so aufgebauten Übertragungsscheiben 6 und 7 sind aus Gründen der Festigkeit (Berstdrehzahl) jeweils sich in Scheibenebene erstreckende Fasergewebe eingearbeitet, die einen multidirektionalen Aufbau aufweisen. Darüber hinaus ist diese Keramik mit Verstärkungsfasern versehen, die eine mittlere Länge von mindestens 50 mm aufweisen.

Demgegenüber bestehen die Antriebsscheiben 2, 3, 4 und 5 bzw. ihre Reibabschnitte aus gesintertem organisch gebundenem Werkstoff, der im wesentlichen folgende metallische und nichtmetallische Bestandteile umfasst: Messing, Eisen, Kupfer, Aluminium, eine siliziumreiche Phase, eine schwefelreiche Phase, Kohlenstoff und Phenolharzbinder enthält. Bei systematischen Auswahluntersuchungen hat sich ergeben, dass die Antriebsscheiben 2, 3, 4 und 5 bzw. ihre Reibabschnitte dann teleologische Eigenschaften besitzen, wenn die besagten Bestandteile wie folgt verteilt sind: Messing ca. 14 bis 16 vol %, Eisen ca. 18 bis 20 vol %, Kupfer ca. 3 bis 6 vol %, Aluminium ca. 5 bis 6 vol %, siliziumreiche Phase ca. 1 bis 3 vol %, schwefelreiche Phase 3 bis 4 vol %, Kohlenstoff ca. 28 bis 30 vol % und Phenolharzbinder Rest vol %.

Die Antriebsscheiben 2, 3, 4 und 5 und die Übertragungsscheiben 6 und 7 können aus einem Stück mit den erfindungsgemäßen Werkstoffen hergestellt sein. Denkbar ist aber auch, dass lediglich in den Reibabschnitten Ral, Rall, RaIII, RaIV, RaV, RaVI, RaVII und RaVII die besagten Werkstoffe vorgesehen sind; im Bereich dieser Reibabschnitte können auch lediglich mehrere über den Umfang verteilte Beläge angeordnet sein, die mit den entsprechenden bspw. Antriebsscheiben durch Nieten; Kleben oder dergl. verbunden sein können.

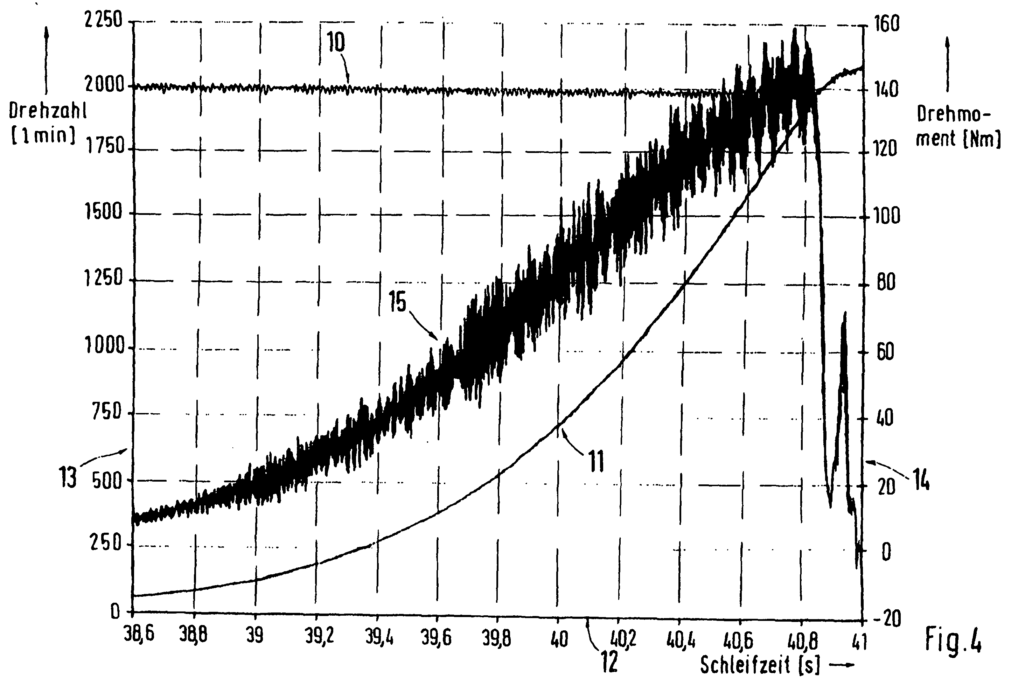

In Fig. 4 ist ein Diagramm dargestellt, aus dem der Verlauf der Drehmomentübertragung beim Kupplungsvorgang zwischen Antriebsdrehzahl 10 und Abtriebsdrehzahl 11 bei einer Kupplung ohne die Antriebsscheiben und Übertragungsscheiben nach der vorliegenden Erfindung. Dabei ist auf einer Abszissenachse 12 die Schleifzeit in Sekunden (s), auf einer ersten linken Ordinatenachse 13 die Drehzahl (1/min) und auf einer zweiten rechten Ordinatenachse 14 das Drehmoment (Nm). Dabei wird deutlich, dass bei vorgegebener Antriebsdrehzahl 9 bzw. Abtriebsdrehzahl 10 eine Drehmomentlinie 15 etwa zwischen 35 und 35,5 Sekunden erhebliche Ausschläge aufweist, die vom Fahrer als störendes Rupfen wahrgenommen werden.

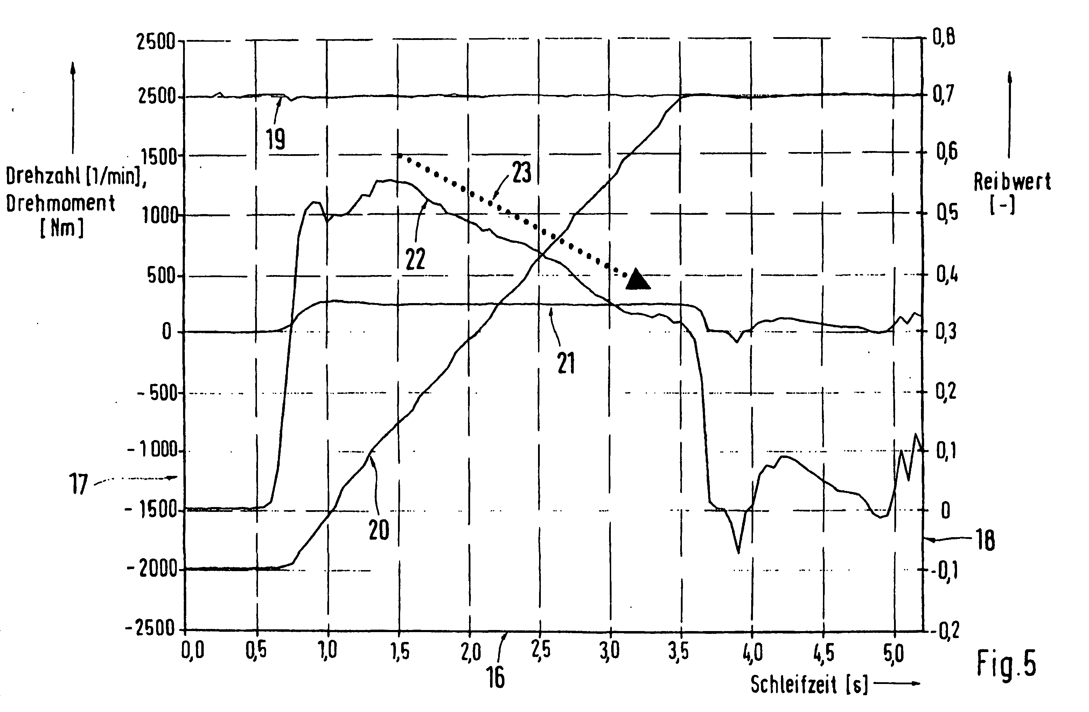

Das Diagramm gemäß Fig. 5 gibt eine Drehmomentübertragung mit gleicher Antriebsdrehzahl 10 und Abtriebsdrehzahl 11 wie in Fig. 4 wieder, jedoch weisen die Antriebsscheiben 2,3,4 und 5 sowie die Übertragungsscheiben 6 und 7 einen erfindungsgemäßen Aufbau auf. Die Drehmomentlinie 15 der so gestalteten Kupplung folgt in der Schleifzeit etwa zwischen 38,6 und 40,8 Sekunden mit vertretbaren Ausschlägen tendenziell der Abtriebsdrehzahl 11, was die weitgehende Rupfunempfindlichkeit der Antriebsscheiben 2,3,4 und 5 sowie der Übertragungsscheiben zeigt.

Schließlich geht aus Fig. 5 ein Diagramm hervor, auf dessen Abszissenachse 16 die Schleifzeit in Sekunden (s) aufgetragen ist. Die erste linke Ordinatenachse 17 verdeutlicht die Drehzahl (1/min) und Drehmoment (Nm), wogegen eine zweite rechte Ordinatenachse 18 den Reibwert (Rw) wiedergibt. Außerdem enthält das Diagramm folgende Linien: die Antriebsdrehzahl 19, die Abtriebsdrehzahl 20, das Drehmoment 21 und den Reibwert 22. Durch die Antriebsscheiben 2,3,4, und 5 sowie die Übertragungsscheiben 6 und 7 nach der Erfindung ergibt sich etwa in der Schleifzeit zwischen 1,5 und 3,6 Sekunden, dass der Reibwert 22 eine mit der Pfeillinie 22 hervorgehobene abfallende Tendenz aufweist, was gleichsam die Rupfunempfindlichkeit der erfindungsgemäßen Kupplung 1 darstellt.

## Patentansprüche

1. Kupplung, vorzugsweise Mehrscheibenkupplung der Reibungsgattung zwischen einer Brennkraftmaschine und einem Getriebe, welche Kupplung in ein Kraftfahrzeug einbaubar ist und Antriebsscheiben und Übertragungsscheiben umfasst, wobei
die Antriebsscheiben (2, 3, 4 und 5) und die Übertragungsscheiben (6 und 7) zumindest im Bereich von Reibabschnitten (Ral, Rall, RaIII, RaIV, RaV, RaVI, RaVIII und RaVIII) in der Weise ausgebildet sind, dass die Reibabschnitte weitgehend rupfunempfindlich sind,
die Antriebsscheiben (2, 3, 4 und 5) und die Übertragungsscheiben (6 und 7) zumindest im Bereich der Reibabschnitte (Ral, Rall, Ralll, RaIV, RaV, RaVI, RaVII und RaVIII) mit solchen Werkstoffen versehen sind, durch die ein abfallender Reibwert (RW) entsteht,
**gekennzeichnet durch** folgende Merkmale:
- die Reibabschnitte (RaII, RaIII, RaVI und RaVII) der Übertragungsscheiben (6 und 7) bestehen aus Keramik mit Fasergewebe,
- die Reibabschnitte ( Ral, RaIV, RaV und RaVIII) der Antriebsscheiben (2,3, 4 und 5) bestehen aus gesintertem organisch gebundenem Werkstoff.

2. Kupplung nach Anspruch 1, **dadurch gekennzeichnet, dass** das Fasergewebe einen multidirektionalen Aufbau aufweist.

3. Kupplung nach Anspruch 1, **dadurch gekennzeichnet, dass** die Keramik mit Verstärkungsfasern versehe ist, die eine mittlere Länge von mindestens 50 mm aufweisen.

## Claims

1. A clutch, preferably a multi-disc clutch of the friction type between an internal-combustion engine and a gearbox, which clutch can be fitted in a motor vehicle and comprises driving discs and transmission discs,
wherein the driving discs (2, 3, 4 and 5) and the transmission discs (6 and 7) are designed, at least in the region of friction portions (**RaI, RaII, RaIII, RaIV, RaV, RaVI, RaVIII** [*sic - recte* **RaVII**] and **RaVIII**), in such a way that the friction portions are substantially not susceptible to grabbing,
the driving discs (2, 3, 4 and 5) and the transmission discs (6 and 7) are provided, at least in the region of the friction portions (**RaI, RaII, RaIII, RaIV, RaV, RaVI, RaVII** and **RaVIII**), with those materials by which a decreasing coefficient of friction **(RW)** is produced,
**characterized by** the following features:
the friction portions **(RaII, RaIII, RaVI** and **RaVII)** of the transmission discs (6 and 7) consist of ceramic material with a fibrous tissue,
and the friction portions **(RaI, RaIV, RaV** and **RaVIII)** of the driving discs (2, 3, 4 and 5) consist of sintered organically bonded material.

2. A clutch according to Claim 1, **characterized in that** the fibrous tissue has a multidirectional structure.

3. A clutch according to Claim 1, **characterized in that** the ceramic material is provided with reinforcing fibres which have an average length of at least 50 mm.

## Revendications

1. Embrayage, de préférence embrayage à plusieurs disques du type à friction entre un moteur à combustion interne et une transmission, lequel embrayage peut être monté dans un véhicule automobile et comprend des disques d'entraînement et des disques de transmission, les disques d'entraînement (2, 3, 4 et 5) et les disques de transmission (6 et 7) étant réalisés au moins dans la zone de segments de friction (RaI, RaII, RaIII, RaIV, RaV, RaVI, RaVII et RaVIII) de manière que les segments de friction soient largement insensibles au broutage, les disques d'entraînement (2, 3, 4 et 5) et les disques de transmission (6 et 7) étant pourvus, au moins dans la zone des segments de friction (RaI, RaII, RaIII, RaIV, RaV, RaVI, RaVII et RaVIII) de matériaux qui donnent lieu à un coefficient de friction (RW) décroissant, **caractérisé par** les caractéristiques suivantes :
les segments de friction (RaII, RaIII, RaVI et RaVII) des disques de transmission (6 et 7) se composent de céramique avec tissu de fibres,
les segments de friction (RaI, RaIV, RaV et RaVIII) des disques d'entraînement (2, 3, 4 et 5) se composent d'un matériau fritté lié de manière organique.

2. Embrayage selon la revendication 1, **caractérisé en ce que** le tissu de fibres présente une structure multidirectionnelle.

3. Embrayage selon la revendication 1, **caractérisé en ce que** la céramique est pourvue de fibres de renfort qui présentent une longueur moyenne d'au moins 50 mm.
